# EUROPEAN PATENT APPLICATION

(11) **EP 1 489 486 A2**
(43) Date of publication of application: **22.12.2004**
(21) Application number: 04253598.9
(22) Date of filing: 16.06.2004
(51) Int. Cl.: G06F 3/033

(54) **Automatic tab displaying and maximum tab storing user interface and a reprographic machine having same**

(30) Priority: 20.06.2003 US 601223
(71) Applicant: Xerox Corporation, Rochester, New York 14644 (US)
(72) Inventor: Emerson, William C., Rochester, NY 14609 (US); Martin, Andrew T., Honeoye Falls, NY 14472 (US); Knodt, Ruediger W., Rochester New York 14618 (US); Perry, Thomas J., Fairport, NY 14450 (US); Totten, Karen, Macedon, NY 14502 (US); Miska, Joseph E., Rochester, NY 14612 (US); Watson, Keith S., Spencerport, NY 14559 (US); Davis, Gary M., Rochester, NY 14618 (US); Whiting, John F., Webster, NY 14580 (US); Breuer, Kelly J., Rochester, NY 14613 (US)
(74) Representative: Skone James, Robert Edmund

(57) **Abstract**

An automatic tab displaying and maximum tab storing UI assembly (150) for use on a digital imaging machine includes a display device (152) having (i) a selectable screens (210) each having a different user interactive information sets (154) and a screen selection tab (214,224,234) having a visible outline, a first surface size (S1), and tab identification markings (218,228,238); (ii) a first display area (240) for displaying at least one screen of the selectable screens; and (iii) at least a second display area (250) for containing all the selection tabs of the selectable screens. The at least second display area (250) has (i) a second surface size less than a sum total of each of the first surface size of each of the selection tabs, (ii) a first display portion for displaying a first set of the selection tabs in an open mode showing fully a visible outline and identification markings of each tab in the first set, and (iii) at least a second display portion for displaying at least a second set of the selection tabs in a folded mode showing only part of the visible outline of each tab in the at least second set. The automatic tab displaying and maximum tab storing UI assembly also includes a programmable controller assembly that is connected to the display device and includes a tab manipulator for automatically moving the selection tabs in the at least second display area in a first direction from the open mode towards the folded mode, and in a second direction from the folded mode towards the open mode.

## Description

The present invention is directed to user interfaces (UI's), and more specifically, to an automatic tab displaying and maximum tab storing user interface assembly as well as reprographic machine having same.
One example of a conventional reprographic machine is the office copier. Traditionally, the copier, in the office equipment context, refers to a light lens xerographic copier in which paper originals are in fact photographed. The images are focused on an area of a photoreceptor, which is subsequently developed with toner. The developed image on the photoreceptor is then transferred to a copy sheet that in turn is used to create a permanent copy of the original.

In recent years, however, there has been made available what is known as digital copiers or printing machines. In the most basic functions, a digital copier or printing machine performs the same functions as a light lens copier, except that it includes a programmable controller for controlling its functions, and the original image to be copied is not directly focused on a photoreceptor. Instead, with a digital copier or printer, the original image is received, for example, from a personal computer (PC) work station, or storage media, or is scanned by a device generally known as a raster input scanner (RIS) that is typically in the form of a linear array of small photosensors. The controller further enables a wide range of image manipulation and processing capabilities.

The original image received as such is focused on the photosensors in the RIS. The photosensors convert the various light and dark areas of the original image to a set of digital signals. These digital signals are temporarily retained in a memory and then eventually are further processed, and manipulated/and or used as is, with the aid of a user interface (UI) assembly, to operate the digital printing machine or copier when it is desired to print copies of the original. The digital signals may also be sent directly to the digital printing machine or copier without being stored in a memory. Typically however, each such digital printing machine or copier includes a user interface (UI) having an array of features.

User interfaces (UI's) on such digital printing machines or copiers typically utilize LCD's or full screen displays with graphics that include selectable objects in the form of buttons, icons, tabs, and file folders for example. With particular reference to the tabs, because tabs need to include text markings which require space for identification, only a limited number of tabs, say 4 to 6 on a half screen UI display, and 8-10 on a full screen display, can be shown across the screen display in a single row of such tabs. Unfortunately however, the proliferation and increasing number of new features on such imaging machines has created a need for more and more tabs which would mean a need for more than say 4 to 6 on a half screen UI display, and 8-10 on a full screen display. Conventional solutions have displayed multiple rows of tabs, but this reduces the available space on the screen; others use a "more tabs" button (perhaps with a "back" button) which displays a new set of tabs over the top of the original set, but this is cumbersome and unintuitive.

In accordance with the present invention, there is provided an automatic tab displaying and maximum tab storing UI assembly for use on a digital imaging machine. The automatic tab displaying and maximum tab storing UI assembly includes a display device having (i) a plurality of selectable screens each having a different user interactive information set and a screen selection tab that has a visible outline, a first surface size, and tab identification markings; (ii) a first display area for displaying at least one screen of the plurality of selectable screens; and (iii) at least a second display area for containing all the selection tabs of the plurality of selectable screens. The at least second display area has (i) a second surface size less than a sum total of each of the first surface size of each of the selection tabs, (ii) a first display portion for displaying a first set of the selection tabs in an open mode showing fully a visible outline and identification markings of each tab in the first set, and (iii) at least a second display portion for displaying at least a second set of the selection tabs in a folded mode showing only part of the visible outline of each tab in the at least second set. The automatic tab displaying and maximum tab storing UI assembly also includes a programmable controller assembly that is connected to the display device and includes a tab manipulator for automatically moving the selection tabs in the at least second display area in a first direction from the open mode towards the folded mode, and in a second direction from the folded mode towards the open mode; thereby enabling the at least second display area to contain and intuitively fully display more selection tabs than can ordinarily be fully displayed within the second display area.

The following is a brief description of the drawings used to describe the present invention, and thus, these drawings are being presented for illustrative purposes only and thus should not limit the scope of the present invention, wherein:
FIG. 1 is an illustration of a reprographic machine including the automatic tab displaying and maximum tab storing UI assembly in accordance with the present invention;
FIG. 2 is a block diagram illustration of the reprographic machine of FIG. 1;
FIG.3 is a first illustration of the automatic tab displaying and maximum tab storing UI assembly of the present invention showing the first tab selected and tabs in the rightmost area folded;
FIG. 4 is a second illustration of the automatic tab displaying and maximum tab storing UI assembly of the present invention the sixth previously folded tab in the folded rightmost area about to be selected;
FIG. 5 is a third illustration of the automatic tab displaying and maximum tab storing UI assembly of the present invention showing the sixth tab selected and tabs in the leftmost area folded;
FIG. 6 is a fourth illustration of the automatic tab displaying and maximum tab storing UI assembly of the present invention showing fully displayed, partially displayed, and outline-only tabs to the right; and
FIG. 7 is a fifth illustration of the automatic tab displaying and maximum tab storing UI assembly of the present invention showing fully displayed, partially displayed, and outline-only tabs to the left.

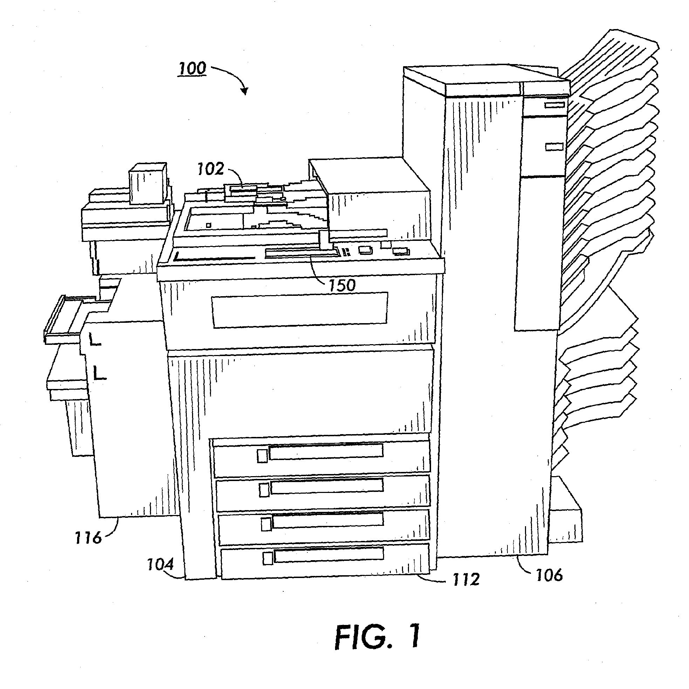

Referring now to FIGS. 1-2, an overall construction, and a block diagram, of a digital reprographic machine 100 including the automatic tab displaying and maximum tab storing UI assembly 150 of the present invention, are illustrated. As shown, the digital machine 100 includes a scanning device 102, a printing module 104, and the automatic tab displaying and maximum tab storing UI assembly 150 (to be described in detail below). The digital machine 100 may also include a finisher device 106 which may be a sorter, tower mailbox or stapler, and at least an electronic subsystem (ESS) controller 110 for controlling all the features and functions of the machine 100. The printing module 104 may include a plurality of paper trays 112 that store paper used in the printing process. Lastly, the digital machine may include a high capacity feeder 116 which is capable of holding large amounts of paper stock to be used by the machine.

In a typical scanning function, the operator would utilize the scanning device 102 to scan in the images from the original documents. This scanning device 102 may be a platen type scanner or may include a constant velocity transport system which moves the original documents across a stationary scanning device. Moreover, the scanning device 102 may also include a document handling system which is capable of placing the original documents, automatically, on the glass platen for scanning.

With respect to the printing functions, the printing module 104 would retrieve the proper paper from one of the multiple paper trays 112 or the high capacity feeder 116, render the desired image on the retrieved paper, and output the printed image to the finishing device 106 for further operations.

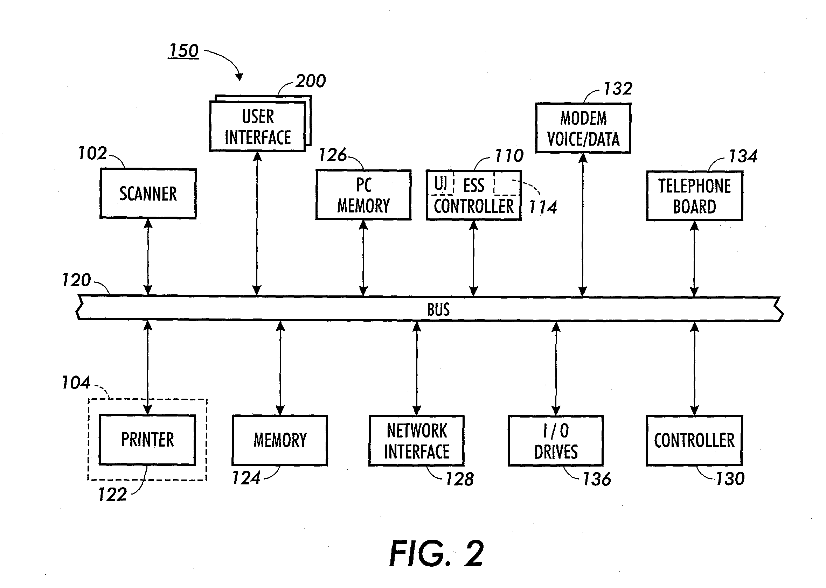

An example of the basic architecture of the digital machine 100 is illustrated as a block diagram in detail in FIG. 2, and includes the scanner 102 which converts an original image into a set of digital signals that can be either stored or reproduced. The scanner 102 is connected to a central bus system 120 which may be either a single bus or a plurality of buses which provide interconnections and intercommunications between the various modules and stations on the digital machine.

The digital machine 100 also includes a digital printing device 122 of the printing module 104 (FIG. 2) which converts digital signals representing an image into a hardcopy of that image on a recording medium whether the recording medium be paper, transparency, or other type of markable medium. A first memory device 124 is provided for storing a variety of types of digital information such as machine fault information, machine history information, digital images to be processed at a later time, instruction sets for the machine or job instruction sets. A second memory device forming an electronic pre-collation memory section 126 may be provided for storing the digital representation of the image being presently rendered by the digital printing device 122. In the electronic pre-collation memory 126, the digital image is already laid out in its page structure so that it can be readily rendered by the digital printing device 122.

Since the digital machine 100 may be connected to a network including a PC work station (not shown), it includes a network interface 128 and an additional controller 130 which control the interrelationship between the various modules or stations on the digital machine 100 and the network.

In cases where the digital machine 100 is a multi-function machine, it would include, typically, a voice/data modem 132 and a telephone circuit board 134. Moreover, the digital machine may also include input/output drives 136 such as a floppy disc drive, a CD ROM drive, a tape drive, or other type of drive which can accept a portable memory device.

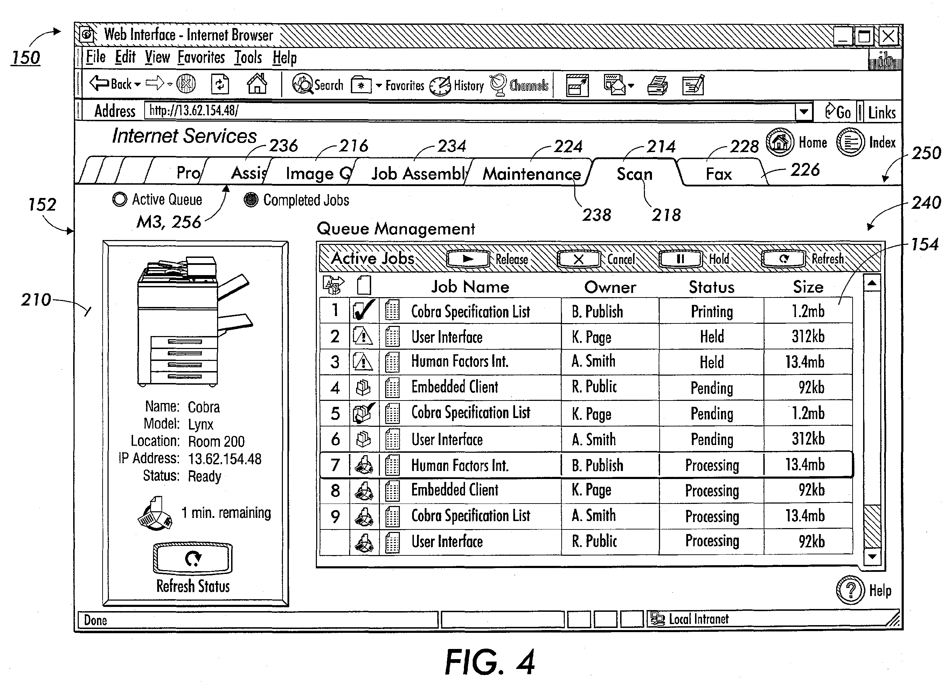

Referring now to FIGS. 1-7, the digital machine 100, in accordance with the present invention, includes the automatic tab displaying and maximum tab storing UI assembly 150 for maximizing tabbed machine features and making tab selection and display intuitive. The automatic tab displaying and maximum tab storing UI assembly 150 with the aid of the controller 110, effectively enables the user to control, at the machine, a relatively larger array of machine features as well as various functions of the digital machine by storing and intuitively as well as automatically presenting a large number of tabbed informational screens to the user.

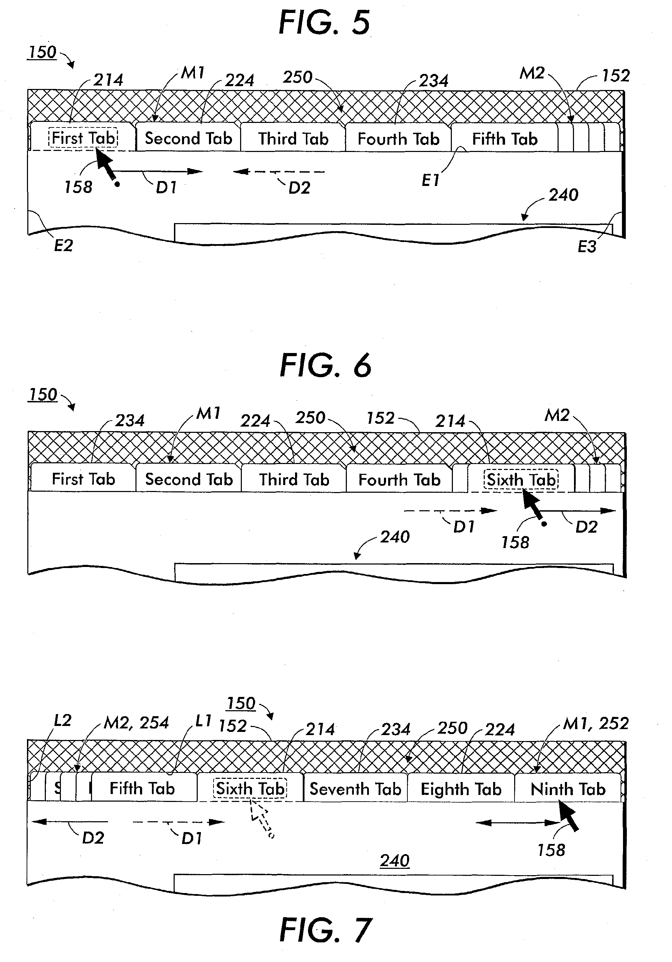

Referring in particular to FIGS. 6-7, the automatic tab displaying and maximum tab storing UI assembly 150 includes a display screen 152 for displaying user dialog information 154. It also includes a series of machine process control and user interactive functional features shown generally as 156, for operator access, and for controlling operation of the machine 100. An associated controller such as the ESS 110 is connected to and forms part of the automatic tab displaying and maximum tab storing UI assembly 150.

The display screen 152 is any suitable display screen that may be controlled by a point and click device 158, it can be a touch sensitive video screen. The point and click device 158 for example is a mouse. The series of machine process control and user interactive functional features 156 as illustrated include frequently used and well known machine functional features such as (a) color mode (auto, color, black and white); (b) sides imaged (1 to 1; 1 to 2; 2 to 2; and 2 to 1); (c) paper supply (auto, tray 1, tray 2, tray 3, tray 4, tray 5); (d) reduce/enlarge (auto, 100%, 50%, 64%[17" to 11"], 78%[14" to 11"]; and (e) copy output (collated, stapled, uncollated).

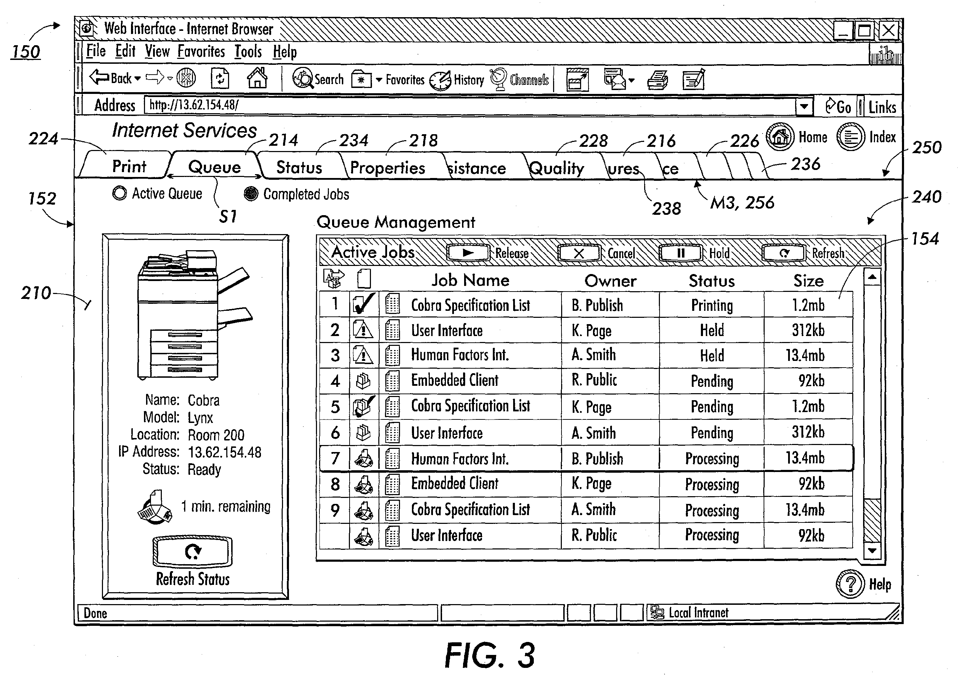

Referring in particular to FIGS. 3-7, the automatic tab displaying and maximum tab storing UI assembly 150 as illustrated includes a display device 152 having a plurality of selectable screens, 210 (shown), each having a different user interactive information set 154 for example (FIGS. 6-7), and a screen selection tab 214, 224, 234, for example, that has a visible outline 216, 226, 236 for example. Each screen selection tab also has a first surface size S1, and tab identification markings 218, 228, 238 for example. The display device 152 also has a first display area 240 for displaying at least one screen 210 (shown) of the plurality of selectable screens, and at least a second display area 250 for containing all the screen selection tabs 214, 224, 234, for example.

The at least second display area 250 has a second surface size S2 that is less than a sum total of each of the first surface size S1 of each of the selection tabs 214, 224, 234 for example. The at least second display area 250 also has a first display portion 252 for displaying a first set T1 of the selection tabs 214, 224, 234 for example in an open mode M1 showing fully open tab with a completely visible outline and identification markings. The at least second display area 250 also includes at least a second display portion 254 for displaying at least a second set T2 of the screen selection tabs 214, 224, 234 for example in a folded mode M2 showing only part of the markings 218, 228, 238 for example and part of the visible outline 216, 226, 236 for example of each tab in the at least second set T2. The at least second display area 250 further has at least a third display portion 256 for displaying, in full first surface size, at least one selection tab 214, 224, 234 for example of at least one screen 210, 220, 230 for example of the plural selectable screens, such that the at least one screen 210, 220, 230 for example is displayed in the first display area 240.

The automatic tab displaying and maximum tab storing UI assembly 150 also includes the programmable controller assembly 110 connected to the display device 200 and having tab manipulation means 114 (FIG. 2) for automatically moving the screen selection tabs 214, 22, 234, for example, in the at least second display area 250 in a first direction D1 (FIGS. 5-7) from the open mode M1 towards the folded mode M2, and in a second direction D2 from the folded mode M2 towards the open mode M1, thereby enabling the at least second display area 250 to contain and intuitively fully display more selection tabs 214, 22, 234, for example, than can ordinarily be fully displayed therein.

The identification markings 218, 228, 238 for example of each selection tab 214, 224, 234 for example, include descriptive text information. The at least second display area 250 includes a transition or third portion 256 within which in going from the at least second portion 254 to the first portion 252, selection tabs 214, 22, 234, for example, show more and more of the first surface size S1 thereof of each, and more and more outline 216, 226, 236 for example, of each selection tab therein. In the at least second display area 250, adjacent selection tabs move by sliding over and under each other respectively. The tab manipulation means 114 include tab selection means and a pointing device 158.

Still referring to FIGS. 3-7, the at least second display area 250 comprises a vertically narrow and horizontally elongate area. The selection tabs 214, 224, 234 for example that are located further and further away within the at least second portion 254 from the first portion 252, are overlapped to a greater and greater degree by adjacent selection tabs 214, 224, 234 for example than are selection tabs 214, 224, 234 for example located towards the first portion 252. The visible outline 216, 226, 236 for example of each selection tab 214, 224, 234 for example, includes a horizontal top line L1 and a generally vertical end line L2 connecting the top line L1. As also illustrated, each screen selection tab 214, 224, 234 for example is located relative to an edge, for example the top edge E1, of its selectable screen 210, 220, 230, and is movable from one end E2 towards the other end E3 of the screen along such edge E1.

All selection tabs 214, 224, 234 for example contained within the at least second display area 250 comprise a row. In the UI assembly of the present invention, after selection of at least one selection tab 214, 224, 234 for example of the at least one screen210, 220, 230 for example, the at least third display portion 256 overlays and partially hides a part of the first portion 252. In addition, the at least one selection tab 214, 224, 234 for example displayed in the at least third display portion 256 is ocludable by any other selection tabs 214, 22, 234, for example being moved by the manipulation means 114 within the at least second display area 250.

The use of the automatic tab displaying and maximum tab storing UI assembly 150 of the present invention effectively enables and allows easy, intuitive access to a larger set of tabs than could ordinarily fit in the same space with present designs. This will allow for the fitting of more features on machines with space constrained UI's, and hence enable products with greater and greater feature richness. Notice that only about five tabs can be comfortably fitted in the single row of tabs displayed for the half screen display, and perhaps seven for the full screen display. The first tab 214, 224, 234 for example and its pane or screen210, 220, 230 for example are visible on top (queue frame for the full size panel). Some other tabs 214, 224, 234, for example (appearing to be stacked behind the visible pane) are fully visible. Right most tabs 214, 224, 234, for example appear to be overlapped and are partially visible behind the fully visible tabs 214, 224, 234, for example. This right most tabs in the area marked M1 are selectable.

Should the user need to access tabs 214, 224, 234, for example on which markings or text 238 for example is not visible, the user merely touches moves the pointer of a mouse for example (or clicks with the mouse or other pointer device, depending on the technology used) on the hot or folded area M1 on the overlapped tabs at the right most area. If a touch system is used, the first tab of the next set of tabs is placed in front for the half screen. When selected, the selected tab 214, 224, 234 for example will be in its correct position (left to right) among the "new" tabs that become visible from such selection, and with the selected tab 214, 224, 234 for example fully open and on top with its pane or screen 210, 220, 230 fully showing.

Immediately upon coming to the top and opening, the selected tab 214, 224, 234 for example in the right most area will also begin to move to the left. Simultaneously and automatically, tabs 214, 22, 234, for example to the right of the selected tab 214, 224, 234 for example will also slide one by one and in sequence, to the left while also becoming partially to fully visible. Mean while, tabs 214, 22, 234, for example to the left of the selected tab 214, 224, 234 for example simultaneously and automatically slide one by one and in sequence in reverse order to the left, with each right tab 214, 224, 234 for example thereof overlapping the tab 214, 224, 234 for example to its left as necessary with each becoming more and more occluded and only their outlines partially visible.

To make one of the now partially occluded and folded tabs in the left most area a selected tab, the process as described above with respect to the right most area, is reversed. The user therefore starts by selecting such tab from the collapsed tabs in the left most area.

This is better than the alternative multiple tab designs because it allows the user to have all the tabs accessible in a fully open mode M1, partially open mode M3, and outline-only or folded mode M2, in a single row on the UI screen. The tabs 214, 224, 234 for example fold over and under each other when not being used, and then automatically start to open up by sliding to the left or to the right and revealing more and more of themselves until fully open if selected or near a selected tab. This automatic tab displaying and maximum tab storing UI assembly 150 as such makes the UI display screen 210, 220, 230 for example more appealing to the user and intuitively more functional, without taking up a huge amount of real estate space on the local, embedded and web user interfaces.

As can be seen, there has been provided an automatic tab displaying and maximum tab storing UI assembly for use on a digital imaging machine. The automatic tab displaying and maximum tab storing UI assembly includes a display device having (i) a plurality of selectable screens each having a different user interactive information set and a screen selection tab that has a visible outline, a first surface size, and tab identification markings; (ii) a first display area for displaying at least one screen of the plurality of selectable screens; and (iii) at least a second display area for containing all the selection tabs of the plurality of selectable screens. The at least second display area has (i) a second surface size less than a sum total of each of the first surface size of each of the selection tabs, (ii) a first display portion for displaying a first set of the selection tabs in an open mode showing fully a visible outline and identification markings of each tab in the first set, and (iii) at least a second display portion for displaying at least a second set of the selection tabs in a folded mode showing only part of the visible outline of each tab in the at least second set. The automatic tab displaying and maximum tab storing UI assembly also includes a programmable controller assembly that is connected to the display device and includes a tab manipulator for automatically moving the selection tabs in the at least second display area in a first direction from the open mode towards the folded mode, and in a second direction from the folded mode towards the open mode; thereby enabling the at least second display area to contain and intuitively fully display more selection tabs than can ordinarily be fully displayed within the second display area.

The identification markings of each selection tab include descriptive text information. The at least second display area includes a transition portion within which in going from the at least second portion to the first portion, selection tabs show more and more of the first surface size thereof of each, and more and more outline of each selection tab therein.

## Claims

1. An automatic tab displaying and maximum tab storing UI assembly comprising:
(a) a display device including:
(i) a plurality of selectable screens each having a different user interactive information set and a screen selection tab, each said screen selection tab having a visible outline, a first surface size, and tab identification markings;
(ii) a first display area for displaying at least one screen of said plurality of selectable screens; and
(iii) at least a second display area for containing all said selection tabs of said plurality of selectable screens, said at least second area having (x) a second surface size less than a sum total of each of said first surface size of each of said selection tabs, (y) a first display portion for displaying a first set of said selection tabs in an open mode showing fully a visible outline and identification markings of each tab in said first set, and (z) at least a second display portion for displaying at least a second set of said selection tabs in a folded mode showing only part of said visible outline of each tab in said at least second set; and
(b) a programmable controller assembly connected to said display device and including tab manipulation means, said tab manipulation means being programmed for automatically moving said selection tabs in said at least second display area in a first direction from said open mode towards said folded mode, and in a second direction from said folded mode towards said open mode; thereby enabling said at least second display area to contain and intuitively fully display more selection tabs than can ordinarily be fully displayed therein.

2. The UI assembly of claim 1, wherein said at least second display area has at least a third portion for displaying, in full first surface size, at least one selection tab of at least one screen of said plurality of selectable screens, said at least one screen being displayed in said first display area.

3. The UI assembly of claim 2, wherein after selection of at least one selection tab of said at least one screen, said at least third portion overlays and partially hides a part of said first portion..

4. The UI assembly of claim 2 or claim 3, wherein said at least one selection tab displayed in said at least third portion is ocludable by any other selection tabs being moved by said manipulation means within said at least second display area.

5. The UI assembly of any of the preceding claims, wherein said at least second display area includes a transition portion within which in going from said at least second portion to said first portion, selection tabs show more and more of said first surface size thereof of each, and more and more outline of each selection tab therein.

6. The UI assembly of any of the preceding claims, wherein in said at least second display area, adjacent selection tabs move by sliding over and under each other respectively.

7. The UI assembly of any of the preceding claims, wherein selection tabs, located further and further away within said at least second portion from said first portion, are overlapped to a greater and greater degree by adjacent selection tabs than are selection tabs located towards said first portion.

8. The UI assembly of any of the preceding claims, wherein said each screen selection tab is located relative to an edge of its selectable screen, and is movable from one end towards the other along said edge.

9. A digital image printing machine for producing toner images on copy sheets, the electrostatographic reproduction machine comprising:
(a) a moveable image bearing member having an image bearing surface;
(b) means for forming a toner image on said image bearing surface and for transferring said toner image onto a copy sheet of paper; and
(c) an automatic tab displaying and maximum tab storing UI assembly including
(i) a display device having (i) a plurality of selectable screens each having a different user interactive information set and a screen selection tab, each said screen selection tab having a visible outline, a first surface size, and tab identification markings; (ii) a first display area for displaying at least one screen of said plurality of selectable screens; and (iii) at least a second display area for containing all said selection tabs of said plurality of selectable screens, said at least second area having (x) a second surface size less than a sum total of each of said first surface size of each of said selection tabs, (y) a first display portion for displaying a first set of said selection tabs in an open mode showing fully a visible outline and identification markings of each tab in said first set, and (z) at least a second display portion for displaying at least a second set of said selection tabs in a folded mode showing only part of said visible outline of each tab in said at least second set; and
(ii) a programmable controller assembly connected to said display device and including tab manipulation means, said tab manipulation means being programmed for automatically moving said selection tabs in said at least second display area in a first direction from said open mode towards said folded mode, and in a second direction from said folded mode towards said open mode; thereby enabling said at least second display area to contain and intuitively fully display more selection tabs than can ordinarily be fully displayed therein.

10. A machine according to claim 9, wherein the automatic tab displaying and maximum tab storing UI assembly is made according to any of claims 1 to 8.
